# EUROPÄISCHE PATENTANMELDUNG

(11) **EP 3 960 279 A1**
(43) Veröffentlichungstag der Anmeldung: **02.03.2022**
(21) Anmeldenummer: 20193922.0
(22) Anmeldetag: 01.09.2020
(51) Int. Cl.: B01D 53/75, B01D 53/80, B01D 53/96

(54) **REZIRKULIERUNG VON WERTSTOFFEN AUS DER ABGASREINIGUNG**

(71) Anmelder: Primetals Technologies Austria GmbH, 4031 Linz (AT)
(72) Erfinder: Fleischanderl, Alexander, 4645 Gruenau (AT); Goetz, Martin, 4210 Unterweitersdorf (AT); Neuhold, Robert, 9523 Villach-Landskron (AT); Plattner, Tobias, 4203 Altenberg bei Linz (AT)
(74) Vertreter: Metals@Linz

(57) **Zusammenfassung**

Die Anmeldung betrifft ein Verfahren und eine Vorrichtung zur Rezirkulierung von Wertstoffen in festem Abscheidungsprodukt einer Abgasreinigung von Abgas, wobei nach Vereinigung zumindest einer Teilmenge des festen Abscheidungsproduktes mit Löse-Wasser weitgehende Abtrennung von wasserunlöslichem Material erfolgt. Die bei der Abtrennung erhaltene wässrige Ausgangslösung wird mehreren aufeinanderfolgenden Behandlungsschritten unterworfen, bis für eine nach dem Durchlaufen der Behandlungsschritte erhaltene Produktlösung eine Grenzwertvorgabe erreicht wird.

Zumindest eine Teilmenge des bei der Abtrennung erhaltenen wasserunlöslichen Materials, und/oder eines bei den Behandlungsschritten erhaltenen festen Materials, und/oder eines aus einem oder mehreren Produkten eines oder mehrerer der Behandlungsschritte erthaltenen festen Materials, wird einem Primärprozess zugeführt. Die Vorrichtung zur Rezirkulierung von Wertstoffen umfasst entsprechende Vorrichtungen wie eine Zuführungsvorrichtung.

## Beschreibung

### Gebiet der Technik

Die Erfindung betrifft ein Verfahren und eine Vorrichtung zur Rezirkulierung von Wertstoffen in festen Abscheidungsprodukten einer adsorptiven und Natriumbikarbonat-basierten Abgasreinigung von Abgas eines ersten Primärprozesses mit Abscheidung eines festen Abscheidungsproduktes.

### Stand der Technik

Bei bekannten adsorptiven und Natriumbikarbonat-basierten Abgasreinigungsverfahren mit Abscheidung eines festen Abscheidungsproduktes fallen große Mengen fester Abscheidungsprodukte an, die Wertstoffe enthalten. Oft werden die Abscheidungsprodukte als Sondermüll deponiert.

### Zusammenfassung der Erfindung

### Technische Aufgabe

Es ist die Aufgabe der vorliegenden Erfindung, ein Verfahren und eine Vorrichtung zur Rezirkulierung von Wertstoffen in festen Abscheidungsprodukten bereitzustellen.

### Technische Lösung

Diese Aufgabe wird gelöst durch ein Verfahren zur Rezirkulierung von Wertstoffen in festem Abscheidungsprodukt einer adsorptiven und Natriumbikarbonat-basierten Abgasreinigung von Abgas eines ersten Primärprozesses mit Abscheidung eines festen Abscheidungsproduktes, wobei nach Vereinigung zumindest einer Teilmenge des festen Abscheidungsproduktes mit Löse-Wasser weitgehende Abtrennung von wasserunlöslichem Material erfolgt,
welches dadurch gekennzeichnet ist, dass
es umfasst, dass
die bei der Abtrennung erhaltene wässrige Ausgangslösung mehreren aufeinanderfolgenden Behandlungsschritten unterworfen wird,
bis für eine nach dem Durchlaufen der Behandlungsschritte erhaltene Produktlösung eine Grenzwertvorgabe erreicht wird, wobei Überwachung von einem oder mehreren grenzwertrelevanten Parametern und Regelung der Behandlungsschritte auf Basis der Ergebnisse der Überwachung erfolgt,
und wobei zumindest eine Teilmenge
- des bei der Abtrennung erhaltenen wasserunlöslichen Materials,
   und/oder
- eines bei den Behandlungsschritten erhaltenen festen Materials,
   und/oder
- eines aus einem oder mehreren Produkten eines oder mehrerer der Behandlungsschritte enthaltenen festen Materials,
   dem ersten Primärprozess und/oder einem anderen Primärprozess zugeführt wird.

### Vorteilhafte Wirkungen der Erfindung

Natriumbikarbonat ist NaHCO₃ - auch Natriumhydrogencarbonat genannt.

Das erfindungsgemäße Verfahren umfasst die angeführten Verfahrensmerkmale; es kann zusätzlich auch noch andere Verfahrensmerkmale aufweisen.

Unter Wertstoff ist Material zu verstehen, das im zu reinigenden Abgas enthalten ist - beispielsweise Stäube -, beziehungsweise ein solches Material umfassendes Material - ein solches Material umfassendes Material kann beispielsweise aus dem im zu reinigenden Abgas enthaltenen Material durch physikalische Reaktionen - wie beispielsweise Adsorption oder Absorption - oder chemische Reaktionen entstehendes Material sein. Beispielsweise kann es sich um im Abgas einer Sinteranlage ausgetragenen Erzstaub handeln. Oder es kann sich um ein den Erzstaub umfassendes Material handeln wie beispielsweise diesen Erzstaub adsorbiert an einer zur Abgasreinigung dem Abgas zugegebenen Substanz wie etwa Aktivkohle.
Ein Wertstoff ist ein Material, das zur Zuführung in einen Primärprozess beziehungsweise zur Nutzung in einem Primärprozess zwecks Ausbeutenerhöhung beziehungsweise Bildung des Produktes des Primärprozesses geeignet ist. Ziel ist es, zur umweltverträglicheren und ressourcenschonenderen Betriebsweise Wertstoffe einer Nutzung zuzuführen, beispielsweise im das der Reinigung unterworfene Abgas produzierenden Primärprozess. Die Wertstoffe sind beispielsweise dem Primärprozess zum Zwecke seiner Produktbildung zugegebene Materialien - beispielsweise Erzstaub im Abgas eines Sinterprozesses; bei Eisenerzsinterung Eisenerzstaub. Wertstoffe können im Abgas beispielsweise den Primärprozess ohne Umwandlung in das gewünschte Produkt verlassen - beispielsweise Erzstaub aus einem Sinterprozess - oder nach Umwandlung in das gewünschte Produkt mit dem Abgas ausgetragen werden - beispielsweise Sinterstaub aus einem Sinterprozess. Es ist ressourcenschonend und damit ökologisch und ökonomisch sinnvoll, Wertstoffe in Abgasen aus Primärprozessen auf einfache Weise einer Nutzung im Wirtschaftskreislauf zuzuführen, statt sie als Abfall zu behandeln und damit aus dem Wirtschaftskreislauf auszuleiten. Rezirkulierung von Wertstoffen ist im Rahmen dieser Anmeldung als Zuführung in einen Primärprozess zu verstehen.

Unter Primärprozess ist ein Prozess zu verstehen, bei dem ein zu reinigendes Abgas anfällt, wenn das Produkt des Primärprozesses erzeugt wird; dabei ist unter Produkt des Primärprozesses sein stoffliches Produkt zu verstehen, Wärme oder Elektrizität als Produkt ist nicht mit umfasst. Es kann sich bei einem Primärprozess beispielsweise um den Betrieb einer Sinteranlage, den Betrieb einer Pelletieranlage, den Betrieb eines Stahlwerkkonverters, beispielsweise nach dem LD/BOF-Verfahren, oder den Betrieb eines EAF electric arc furnace handeln.
Bei einer Natriumbikarbonat-basierten Abgasreinigung eines Abgasstromes aus einem Primärprozesses wird festes Material - auch genannt festes Abscheidungsprodukt - aus dem gereinigten Abgas abgeschieden. Dabei handelt es sich beispielsweise um Stäube aus dem Primärprozess - wie beispielweise Asche, Eisenoxide -, unverbrauchtes Natriumbikarbonat, Natriumkarbonat, durch chemische Reaktion mit Komponenten des Abgasstromes entstandene Substanzen - wie beispielsweise Natriumsulfat -, oder anderes zur Abgasreinigung in den Abgasstrom eingegebenes Material - beziehungsweise dessen Reaktionsprodukte mit Komponenten des Abgasstromes. Letzteres Material ist beispielsweise Adsorptionsmaterial, das zur Reinigung durch Adsorption beiträgt - beispielsweise Aktivkohle.

Zumindest eine Teilmenge des festen Abscheidungsproduktes wird mit Löse-Wasser vereinigt; es kann auch das gesamte feste Abscheidungsprodukt mit Löse-Wasser vereinigt werden. Beispielsweise werden von 100 kg des festen Abscheidungsproduktes nur 80 kg, oder nur 95 kg, oder die gesamten 100 kg mit Löse-Wasser vereinigt. Die Teilmenge ist entweder so zusammengesetzt, wie das gesamte feste Abscheidungsprodukt, oder sie kann sich bezüglich Zusammensetzung unterscheiden; so kann sie beispielsweise bezüglich bestimmter Teilchengrößen oder Dichten angereichert oder abgereichert sein im Vergleich zur durchschnittlichen Zusammensetzung des gesamten festen Abscheidungsproduktes.

Die Vereinigung mit Löse-Wasser kann batch-weise -auch genannt chargenweise - erfolgen oder kontinuierlich.

Bei der Vereinigung mit Löse-Wasser entsteht ein heterogenes Stoffgemisch aus Flüssigkeit und darin fein verteilten Festkörpern aus wasserunlöslichem Material - eine Suspension. Nach der Vereinigung mit Löse-Wasser erfolgt weitgehende Abtrennung des wasserunlöslichen Materials, und es wird eine wässrige Ausgangslösung erhalten. Unter weitgehender Abtrennung ist zu verstehen, dass zumindest 70 Massen%, bevorzugt zumindest 90 Massen% der wasserunlöslichen Bestandteile des mit Löse-Wasser vereinigten festen Abscheidungsproduktes abgetrennt werden; die wässrige Ausgangslösung kann nach der Abtrennung in geringem Ausmaß auch wasserunlösliches Material enthalten, beispielsweise als Schwebstoffe. Es ist vorteilhaft, möglichst viel wasserunlösliches Material abzutrennen, da wasserunlösliches Material Wertstoffe enthalten kann und geeignet sein kann, in den Primärprozess zurückgeführt zu werden, beziehungsweise weil es die Effektivität und/oder Effizienz nachfolgender Behandlungsschritte beeinträchtigen kann. Zur weitgehenden Abtrennung können Verfahren wie beispielsweise Filtration - gegebenenfalls unter Druck -, Sedimentation, Zentrifugation verwendet werden; je nach Verfahren können wasserunlösliche Bestandteile mit wirtschaftlich vertretbarem Aufwand verschieden gründlich abgetrennt werden.

Die bei der Abtrennung erhaltene wässrige Ausgangslösung wird mehreren aufeinanderfolgenden Behandlungsschritten unterworfen.

Es wird zumindest zwei Behandlungsschritten unterworfen, diese können der gleichen Behandlungsart angehören oder verschiedenen Behandlungsarten.

Es können auch mehrere Behandlungsschritte einer Behandlungsart oder mehrerer Behandlungsarten durchgeführt werden.

Nach einer Ausführungsvariante wird zumindest ein Behandlungsschritt batch-weise durchgeführt - beispielsweise Filtration. In diesem Fall ist in den voran und nachgeschalteten Behandlungsschritten Pufferkapazität - beispielsweise durch Vorsehen von Pufferbehältern - vorzusehen.

Nach einer bevorzugten Ausführungsvariante folgen alle Behandlungsschritte in kontinuierlichem Verlauf aufeinander. Das ermöglicht kompaktere und wirtschaftlichere Bauweise, da auf Pufferbehälter für batch-Betrieb verzichtet werden kann, und lässt sich einfacher regeln. Gegebenenfalls sind redundante Systeme vorzusehen, um Prozessschritte an nicht kontinuierlich betreibbaren Anlagenteilen - beispielsweise Filterpressen - kontinuierlich durchführen zu können. Bevorzugt ist es, dass die Ausgangslösung die Behandlungsschritte kontinuierlich durchläuft, bis der Grenzwert erreicht ist.

Erfindungsgemäß wird Behandlungsschritten unterworfen, bis der vorgegebene Grenzwert für die nach dem Durchlaufen der Behandlungsschritte erhaltene Produktlösung erreicht wird.

Erfindungsgemäß erfolgt Überwachung - durch Messung - von einem oder mehreren grenzwertrelevanten Parametern, und Regelung der Behandlungsschritte erfolgt auf Basis der Ergebnisse der Überwachung.
Vorteilhafterweise ist bei der Überwachung durch Messung die Abtastrate der Messung für den einen oder die mehreren grenzwertrelevanten Parameter so gewählt, dass zu erwartende oder eingetretene Abweichungen vom Grenzwert und damit verbundener Regelungsbedarf rechtzeitig genug erkannt werden können. Nach einer Variante werden zur Überwachung zumindest in regelmäßigen Zeitabständen Messungen durchgeführt, also kontinuierlich. In welchen Zeitabständen Messungen zur Ermöglichung einer adäquaten Regelung notwendig sind, hängt von der Trägheit der jeweiligen Behandlungsschritte ab. In welchen Zeitabständen gemessen werden sollte, hängt auch von der Auswertungsdauer ab. In welchen Zeitabständen gemessen wird, hängt auch von der für die Auswertung benötigten Zeitdauer ab. In welchen Zeitabständen gemessen wird, kann auch von der Art behördlich vorgegebener Grenzwerte abhängen - es können beispielsweise zeitliche Mittelwerte verlangt sein, oder punktuelle Messwerte verlangt werden. Grenzwertrelevante Parameter können durch Messung in der Produktlösung erhalten werden, und/oder durch Messung in der Ausgangslösung, und/oder durch Messung während dem Durchlaufen von Behandlungsschritten, beziehungsweise vor und/oder nach dem Durchlaufen eines Behandlungsschrittes. Wenn der Grenzwert beispielsweise eine Konzentration von Fluorid-Ionen vorgibt, kann die Messung des grenzwertrelevanten Parameters Fluorid-Ionen-Konzentration in der Ausgangslösung und in der Produktlösung erfolgen, oder in der Ausgangslösung und nach dem Durchlaufen eines - von anderen Behandlungsschritten gefolgten - Behandlungsschrittes zu seiner Verminderung.

Erfindungsgemäß wird zumindest eine Teilmenge
- des bei der Abtrennung erhaltenen wasserunlöslichen Materials,
   und/oder
- eines bei den Behandlungsschritten erhaltenen festen Materials,
   und/oder
- eines aus einem oder mehreren Produkten eines oder mehrerer der Behandlungsschritte enthaltenen festen Materials,
   dem ersten Primärprozess und/oder einem anderen Primärprozess zugeführt.

Bei dem wasserunlöslichen Material beziehungsweise festem Material kann es sich bei entsprechender Feuchtigkeit auch um einen Schlamm handeln.

Beim Zuführen können vor Eintritt in den anvisierten Primärprozess auch noch Aufbereitungsschritte erfolgen, beispielsweise um das Material leichter transportierbar zu machen - beispielsweise Kompaktierung zu Briketts oder Pellets -, oder um die Wertstoffe aufzukonzentrieren. Es kann beim Zuführen vor Eintritt in den anvisierten Primärprozess auch Vereinigung mit anderem Material erfolgen, und dann die vereinigte Menge zugeführt werden.

Vorzugsweise ist der andere Primärprozess ein Primärprozess der metallurgischen Industrie, welche beispielsweise Erzaufbereitung, Metallerzeugung, Eisenerzeugung, Stahlerzeugung umfasst.

Auf diese Weise können in festen Abscheidungsprodukten enthaltene Wertstoffe genutzt werden. Das ist umweltfreundlich und ökonomisch vorteilhaft, da sie einerseits den Rohstoffeinsatz bei den Primärprozessen vermindern und andererseits Entsorgungsaufwand vermindert werden kann.

Es wird zumindest eine Teilmenge zurückgeführt. Beispielsweise kann von 100 kg alles zurückgeführt werden, oder zumindest 95 % zurückgeführt werden, oder eine Teilmenge von 90 % oder mehr zurückgeführt werden, oder nur eine Teilmenge von 80 kg, oder es kann lediglich eine Teilmenge mit Korngröße oberhalb einer bestimmten Grenze zurückgeführt werden, oder es kann beispielsweise nur eine Teilmenge einer bestimmten Art - beispielsweise eine Teilmenge der Art "aktivkohlebasiertes Material" zurückgeführt werden.

Wenn bei einem oder mehreren Behandlungsschritten kein festes, sondern flüssiges Produkt anfällt, kann dieses nachfolgend gegebenenfalls so behandelt werden, dass festes Material erhalten wird. Das kann beispielsweise durch chemische Behandlung - wie beispielsweise Fällung - oder physikalische Behandlung - wie beispielsweise Adsorption an oder Absorption in feste(n) Partikeln - geschehen.

Die Behandlungsschritte stammen bevorzugterweise aus zumindest einem Mitglied der Gruppe von Behandlungsarten bestehend aus
- Behandlung chemischer Art,
- Behandlung mechanischer Art,
- Behandlung physikalischer Art.

Behandlung chemischer Art beruht auf chemischen Reaktionen mit hinzugegebenen Reagenzien, wobei neue Stoffe gebildet werden; beispielsweise Oxidationen oder Bildung von Salzen. Behandlungsschritte chemischer Art sind beispielsweise Einstellung des pH-Wertes, Oxidation mit beispielsweise Wasserstoffperoxid oder einem Hypochlorit, Ionentausch.

Behandlung physikalischer Art beruht auf physikalischen Prozessen, beispielsweise Adsorption oder Verdunstung. Behandlungsschritte physikalischer Art sind beispielsweise Sedimentation, Adsorption durch Kontaktierung mit hinzugegebener Aktivkohle oder anderen Adsorbentien wie beispielsweise Zeolithe, Aufkonzentrierung durch Verdunstung oder Osmose.

Behandlung mechanischer Art beruht ebenso auf physikalischen Prozessen, beinhaltet jedoch auch zusätzlich Wirkung beziehungsweise Anwendung von Kraft. Behandlungsschritte mechanischer Art sind beispielsweise Filtration wie etwa Membranfiltration - beispielsweise Ultrafiltration -, Sandfiltration, beispielsweise unter Druck - beispielsweise in Kammerfilterpressen -, beziehungsweise unter Wirkung von Schwerkraft - beispielsweise Filtration ohne Druck oder Sedimentation -, oder Zentrifugalkraft - beispielsweise Zentrifugation.

Ein Behandlungsschritt kann auch mehrere Arten von Behandlung vereinen, beispielsweise eine Schwermetallabscheidung mit Sulfiden - beispielsweise Organosulfiden - mit chemischer Reaktion und mit Sedimentation, oder Schwermetallabscheidung mit Ionentausch - beispielsweise an anionischem Polymer - mit chemischer Reaktion und Sedimentation, beziehungsweise andere auf chemischen Reaktionen basierende Fällungen mit Flockungsmittelzugabe, oder Fällung mittels Flockungsmittels mit Adsorption und Sedimentation.

Nach einer bevorzugten Ausführungsform wird die Produktlösung in die Umwelt entlassen - beispielsweise in Gewässer eingeleitet, wenn ihre Zusammensetzung infolge der Behandlungsschritte entsprechend unbedenklich eingestellt ist.

Unter anderem um unproblematische Entlassung in die Umwelt zu ermöglichen, wird die Ausgangslösung mehreren aufeinanderfolgenden Behandlungsschritten unterworfen. Ziel ist, dass nach dem Durchlaufen der Behandlungsschritte für die erhaltene Produktlösung eine Grenzwertvorgabe erreicht wird. Die Grenzwertvorgabe kann sich beispielsweise auf den Gehalt eines einzelnen in der Ausgangslösung enthaltenen Stoffes - oder mehrerer in der Ausgangslösung enthaltenen Stoffe - beziehen, beispielsweise Konzentration Schwermetallionen beziehungsweise schwermetallhaltige Ionen, Konzentration Fluorid beziehungsweise fluoridhaltige Ionen, Konzentration Phosphate beziehungsweise phosphathaltige Ionen, Konzentration Halogenide beziehungsweise halogenidhaltige Ionen, Konzentration Dioxine, Konzentration Aromaten, Konzentration PCB; sie kann sich auch auf ein Qualtitätskriterium - oder mehrere Qualitätskriterien - wie COD (chemical oxygen demand) oder TOC (total organic carbon) oder TN (total nitrogen) oder pH-Wert beziehen.
Die Grenzwertvorgabe wird vom Betreiber des Verfahrens gemacht, beispielsweise basierend auf gesetzlichen Anforderungen.

Nach einer bevorzugten Ausführungsform umfasst das Löse-Wasser bei der Vereinigung des festen Abscheidungsproduktes mit Löse-Wasser Abwasser einer nassen Abgasreinigung. Dabei kann es sich um eine vorgeschaltete nasse Abgasreinigung des Abgases handeln, oder um nasse Abgasreinigung eines anderen Abgases aus demselben Primärprozess, oder um nasse Abgasreinigung eines Abgases eines anderen Primärprozesses.
Durch eine solche weitere Nutzung von Abwasser aus einer nassen Abgasreinigung ist das erfindungsgemäße Verfahren ressourcenschonend, umweltfreundlich und wirtschaftlich vorteilhaft.

Nach einer bevorzugten Ausführungsform erfolgt zumindest ein Behandlungsschritt zur Reduktion von gelösten Schwermetallionen beziehungsweise gelösten schwermetallhaltigen Ionen. Reduktion ist hier im Sinne von Verminderung des Gehaltes zu verstehen.

Nach einer bevorzugten Ausführungsform erfolgt zumindest ein Behandlungsschritt zur Reduktion des COD. Reduktion ist hier im Sinne von Verminderung zu verstehen.

Nach einer bevorzugten Ausführungsform erfolgt zumindest ein Behandlungsschritt zur Reduktion des TOC. Reduktion ist hier im Sinne von Verminderung zu verstehen.

Nach einer bevorzugten Ausführungsform erfolgt zumindest ein Behandlungsschritt zur Einstellung eines gewünschten pH-Wertes.

Nach einer bevorzugten Ausführungsform erfolgt zumindest ein Behandlungsschritt zur Reduktion von gelöstem Fluorid beziehungsweise gelösten fluoridhaltigen Ionen. Reduktion ist hier im Sinne von Verminderung des Gehaltes zu verstehen.
In diesem Behandlungsschritt erfolgt beispielsweise Fluoridfällung durch Zugabe von beispielsweise Aluminiumchlorid - es lässt sich dadurch ein Großteil des in der Ausgangslösung enthaltenen Fluorids abscheiden.

Nach einer bevorzugten Ausführungsform erfolgt zumindest ein Behandlungsschritt mittels Ionentauschermaterial. Bevorzugt ist das Ionentauschermaterial regenerierbar. Mittels Ionentauschermaterial wird beispielsweise der Gehalt an Fluorid, Nitrat gesenkt. Einsatz von selektivem Ionentauschermaterial erlaubt gezielte Senkung.

Nach einer bevorzugten Ausführungsform erfolgt zumindest ein Behandlungsschritt zur Reduktion von Gesamt-Stickstoff TN. Reduktion ist hier im Sinne von Verminderung zu verstehen. Das kann beispielsweise durch Zugabe von Natriumhypochlorit und nachfolgende Filtration mit Aktivkohlefilter geschehen.

Nach einer bevorzugten Ausführungsform wird die Produktlösung für ein anderes Verfahren - also nicht im das zu reinigende Abgas erzeugendenden Primärprozess - als Rohstoffquelle verwendet, speziell wenn ihre Zusammensetzung für das jeweilige Verfahren günstig ist. Beispielsweise kann - beispielsweise mittels thermischer Behandlung durch Verdampfung - die Produktlösung aufkonzentriert werden und dadurch verschiedene Substanzen fraktioniert kristallisiert und dadurch nutzbar gemacht werden.
Beispielsweise lässt sich derart Soda oder Natriumbikarbonat aus der Produktlösung gewinnen, das beispielsweise zu natrium-bikarbonat-basierter Abgasreinigung genutzt werden kann.

Ein weiterer Gegenstand der vorliegenden Anmeldung ist eine Signalverarbeitungseinrichtung mit einem maschinenlesbaren Programmcode, dadurch gekennzeichnet, dass er Regelbefehle zur Durchführung eines erfindungsgemäßen Verfahrens aufweist.

Ein weiterer Gegenstand der vorliegenden Anmeldung ist ein maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Ein weiterer Gegenstand der vorliegenden Anmeldung ist ein Speichermedium mit einem darauf gespeicherten erfindungsgemäßen maschinenlesbaren Programmcode.

Ein weiterer Gegenstand der vorliegenden Anmeldung ist eine Vorrichtung zur Durchführung eines erfindungsgemäßen Verfahrens. Es ist eine Vorrichtung zur Rezirkulierung von Wertstoffen in festem Abscheidungsprodukt einer adsorptiven und Natriumbikarbonat-basierten Abgasreinigung von Abgas eines ersten Primärprozesses mit Abscheidung eines festen Abscheidungsproduktes,
umfassend
- zumindest einen Lösebehälter zur Vereinigung von festem Abscheidungsprodukt mit Löse-Wasser, in den zumindest eine Abscheidungsprodukt-Zugabeleitung und zumindest eine Löse-Wasser-Zuleitung münden,
- zumindest eine von dem Lösebehälter ausgehende Ausleitung zum Ausleiten von Suspension aus dem Lösebehälter,
- zumindest eine Abscheidungsvorrichtung zur Abtrennung von wasserunlöslichem Material aus der Suspension unter Herstellung einer Ausgangslösung, wobei die Ausleitung in die Abscheidungsvorrichtung mündet,
- zumindest eine Behandlungsvorrichtung zur Durchführung von mehreren aufeinanderfolgenden Behandlungsschritten zur Herstellung einer Produktlösung,
- zumindest eine von der Abscheidungsvorrichtung ausgehende Ausgangslösungsleitung zur Einleitung von Ausgangslösung in die Behandlungsvorrichtung,
- zumindest eine Produktlösungsausleitung, die von der Behandlungsvorrichtung ausgeht,
- zumindest eine Überwachungsvorrichtung zur Erfassung von zumindest einem Parameter zumindest in der Produktlösung, die mit zumindest einer Regelvorrichtung geeignet zur Regelung der Behandlungsvorrichtung auf Basis von Ergebnissen der Überwachungsvorrichtung verbunden ist,
- zumindest eine Zuführungsvorrichtung zur Zufuhr von festem Material zu dem ersten Primärprozess und/oder einem anderen Primärprozess.

Optional sind vor dem Lösebehälter jeweils ein - oder mehrere - Pufferbehälter für Löse-Wasser beziehungsweise für festes Abscheidungsprodukt vorhanden - also praktisch in der Löse-Wasser-Zuleitung beziehungsweise in der Abscheidungsprodukt-Zugabeleitung.
Optional sind nach dem Lösebehälter jeweils ein - oder mehrere - Pufferbehälter für Suspension vorhanden - also praktisch in der Ausleitung.
Optional sind nach der Abscheidungsvorrichtung jeweils ein - oder mehrere - Pufferbehälter vorhanden - also praktisch in der Ausgangslösungsleitung.
Optional sind nach der Behandlungsvorrichtung jeweils ein - oder mehrere - Pufferbehälter vorhanden - also praktisch in der Produktlösungs-Ausleitung.
Auch in der Behandlungsvorrichtung können Pufferbehälter vorgesehen sein.

Mittels der Pufferbehälter können unterschiedlich schnell ablaufende Teile des Verfahrensablaufes unter Ermöglichung eines kontinuierlich ablaufenden Verfahrens miteinander verbunden werden.

Die Behandlungsvorrichtung umfasst mehrere Behandlungseinheiten zur Durchführung von mehreren aufeinanderfolgenden Behandlungsschritten zur Herstellung einer Produktlösung.
Sie ist bevorzugterweise geeignet zur Durchführung von mehreren aufeinanderfolgenden Behandlungsschritten aus zumindest einem Mitglied der Gruppe von Behandlungsarten bestehend aus
- Behandlung chemischer Art,
- Behandlung mechanischer Art,
- Behandlung physikalischer Art.
Pro Behandlungsschritt können eine oder mehrere Behandlungseinheiten vorgesehen sein, die sequentiell oder parallel angeordnet sein können.
Beispielsweise kann es für einen Behandlungsschritt zur Reduktion des COD vorgesehen sein, zwei Behandlungseinheiten zu nutzen, in denen nacheinander verschiedene Schritte zur Reduktion des COD vorgenommen werden. Beispielsweise kann für einen Behandlungsschritt zur Reduktion des Gehaltes an gelösten Schwermetallionen beziehungsweise gelösten schwermetallhaltigen Ionen vorgesehen sein, drei Behandlungseinheiten zu nutzen - beispielsweise eine Behandlungseinheit zur Einstellung eines gewünschten pH-Wertes, eine Behandlungseinheit zur Fällung, und eine Behandlungseinheit zum Abziehen von gefälltem Material. Dabei gefälltes Material kann beispielsweise - gegebenenfalls nach einer anschließenden Entwässerung, beziehungsweise in getrocknetem Zustand - in einen Primärprozess zurückgeführt werden oder einer Deponierung zugeführt werden. Gegebenenfalls ist also eine Behandlungseinheit zum Abziehen von gefälltem Material Teil einer Zuführungsvorrichtung.
Es könnten beispielsweise für die Einstellung des pH-Wertes auch zwei oder mehrere parallel angeordnete Behandlungseinheiten vorgesehen sein, die von einer gemeinsamen Leitung für zu behandelnde Flüssigkeit gespeist werden und ihre Produkte in eine gemeinsame Leitung zwecks Zuführung zu folgenden Behandlungsschritten beziehungsweise Behandlungseinheiten entlassen. Entsprechende parallele oder sequentielle Anordnung ist auch für andere Behandlungseinheiten beziehungsweise Behandlungsschritte möglich.
In die in Strömungsrichtung vom Lösebehälter zur Produktlösungsausleitung gesehen erste Behandlungseinheit tritt Ausgangslösung ein, in die nachfolgenden Behandlungseinheiten tritt jeweils das flüssige Produkt der vorhergehenden Behandlungseinheit ein. Aus der in Strömungsrichtung vom Lösebehälter zur Produktlösungsausleitung gesehen letzten Behandlungseinheit tritt Produktlösung aus.

In die jeweiligen Behandlungseinheiten münden gegebenenfalls Reagenzzuleitungen, die zur regelbaren Zuführung der für die jeweilige Behandlung benötigten Reagenzien aus entsprechenden Reagenzlagerbehältern dienen.

Vorzugsweise umfasst die Behandlungsvorrichtung zumindest eine Behandlungseinheit zur Reduktion von gelösten Schwermetallionen beziehungsweise gelösten schwermetallhaltigen Ionen.

Vorzugsweise umfasst die Behandlungsvorrichtung zumindest eine Behandlungseinheit zur Reduktion des COD.

Vorzugsweise umfasst die Behandlungsvorrichtung zumindest eine Behandlungseinheit zur Reduktion des TOC.

Vorzugsweise umfasst die Behandlungsvorrichtung zumindest eine Behandlungseinheit zur Einstellung eines gewünschten pH-Wertes.

Vorzugsweise umfasst die Behandlungsvorrichtung zumindest eine Behandlungseinheit zur Reduktion von gelöstem Fluorid beziehungsweise gelösten fluoridhaltigen Ionen.

Vorzugsweise umfasst die Behandlungsvorrichtung zumindest eine Behandlungseinheit mit Ionentauschermaterial. Vorzugsweise umfasst die erfindungsgemäße Vorrichtung auch Vorrichtungen zur Regenerierung des Ionentauschermaterials.

Vorzugsweise umfasst die Behandlungsvorrichtung zumindest eine Behandlungseinheit zur Reduktion von Gesamt-Stickstoff - TN.

Vorzugsweise umfasst die Behandlungsvorrichtung zumindest eine Vorrichtung zur Feststoffabtrennung, beispielsweise Filter.

Die Überwachungsvorrichtung ist geeignet zur Erfassung zumindest eines Parameters zumindest in der Produktlösung. Es können auch mehrere Parameter in der Produktlösung erfasst werden, und/oder ein oder mehrere Parameter in einem oder mehreren der Behandlungsschritte. Die Regelvorrichtung ist geeignet zur Regelung der Behandlungsvorrichtung auf Basis von Ergebnissen der Überwachungsvorrichtung; dabei kann die Regelung beispielsweise Regelung einzelner Behandlungseinheiten sein. Die Regelvorrichtung ist entsprechend mit der Überwachungsvorrichtung verbunden zur Übermittlung von Ergebnissen.
Es können auch mehrere Überwachungsvorrichtungen vorhanden sein, von denen jede einen einzelnen Parameter oder mehrere Parameter überwachen kann. Es können auch mehrere Regelvorrichtungen vorhanden sein, von denen jede bezüglich eines einzelnen Parameters oder bezüglich mehrerer Parameter regeln kann.

Die Überwachungsvorrichtungen und Regelvorrichtungen können auch gemeinsam in einem Apparat integriert sein.

Die Zuführungsvorrichtung ist geeignet zur Zufuhr von festem Material zu dem ersten Primärprozess und/oder einem anderen Primärprozess. Sie ist geeignet, zumindest eine Teilmenge
- des bei der Abtrennung erhaltenen wasserunlöslichen Materials,
   und/oder
- eines bei den Behandlungsschritten erhaltenen festen Materials,
   und/oder
- eines aus einem oder mehreren Produkten eines oder mehrerer der Behandlungsschritte enthaltenen festen Materials, dem ersten Primärprozess und/oder einem anderen Primärprozess zuzuführen.
   Sie kann dazu beispielsweise Fördervorrichtungen und/oder Leitungen umfassen. Leitungen können beispielsweise von den betreffenden Entstehungsorten der festen Materialien beziehungsweise des wasserunlöslichen Materials- bei im Zuge der Abtrennung erhaltenem wasserunlöslichem Material ist unter dem Entstehungsort der Ort der Abtrennung zu verstehen
- ausgehen und zu Vorrichtungen zur Durchführung des (ersten) Primärprozesses und/oder eines anderen Primärprozesses führen. Fördervorrichtungen können beispielsweise vorgesehen sein, um festes Material in den Leitungen zu bewegen. Fördervorrichtungen können auch Förderbänder umfassen, oder verfahrbare Behälter umfassen, die festes Material an den betreffenden Entstehungsorten der festen Materialien aufnehmen und - gegebenenfalls nach einer Zwischenspeicherung, beispielsweise auf einem Lagerplatz oder in Behältern, Containern oder in Silos - zu Vorrichtungen zur Durchführung des ersten Primärprozesses und/oder eines anderen Primärprozesses führen.

Die Zuführungsvorrichtung kann beispielsweise Vorrichtungen zur Speicherung von festem Material umfassen.
Die Zuführungsvorrichtung kann beispielsweise Vorrichtungen zur Speicherung von Produkten von Behandlungsschritten umfassen.
Die Zuführungsvorrichtung kann beispielsweise Vorrichtungen zur Gewinnung von festem Material aus Produkten von Behandlungsschritten umfassen.
Eine Speicherung kann beispielsweise vorgesehen sein, wenn die Zufuhr von festem Material zu dem ersten Primärprozess und/oder einem anderen Primärprozess nicht kontinuierlich, sondern chargenweise beziehungsweise batchweise erfolgen soll, und daher eine Pufferung der anfallenden Mengen notwendig ist.
Die Zuführungsvorrichtung kann beispielsweise Vorrichtungen zur Aufbereitung umfassen, beispielsweise zur Aufkonzentrierung von Wertstoffen.

Die Zuführung kann über direkte Verbindungen der Behandlungsvorrichtung und/oder der Abscheidungsvorrichtung mit dem Primärprozess erfolgen, oder - beispielsweise bei Vorhandensein von Speichervorrichtungen zur Pufferung der anfallenden Mengen, oder bei Vorhandensein von Aufbereitungsvorrichtungen, die zu einer weiteren Aufbereitung wie beispielsweise Aufkonzentrierung von rückzuführendem Material dienen - über indirekte Verbindungen der Behandlungsvorrichtung und/oder der Abscheidungsvorrichtung mit dem Primärprozess.

Mit so einer Vorrichtung kann ein erfindungsgemäßes Verfahren durchgeführt werden.

### Kurze Beschreibung der Zeichnungen

Die Erfindung wird anhand schematischer beispielhafter Darstellungen von Ausführungsformen erläutert.
Figur 1 zeigt schematisch an einer Ausführungsform das generelle Schema des Ablaufs eines erfindungsgemäßen Verfahrens in einer erfindungsgemäßen Vorrichtung.
Figur 2 zeigt eine Behandlungsvorrichtung, wie sie in Figur 1 ausgeführt sein kann, detaillierter.
Figur 3 zeigt schematisch eine Vorrichtung zur Durchführung eines erfindungsgemäßen Verfahrens im Zusammenhang mit einem ersten Primärprozess.

### Beschreibung der Ausführungsformen

### Beispiele

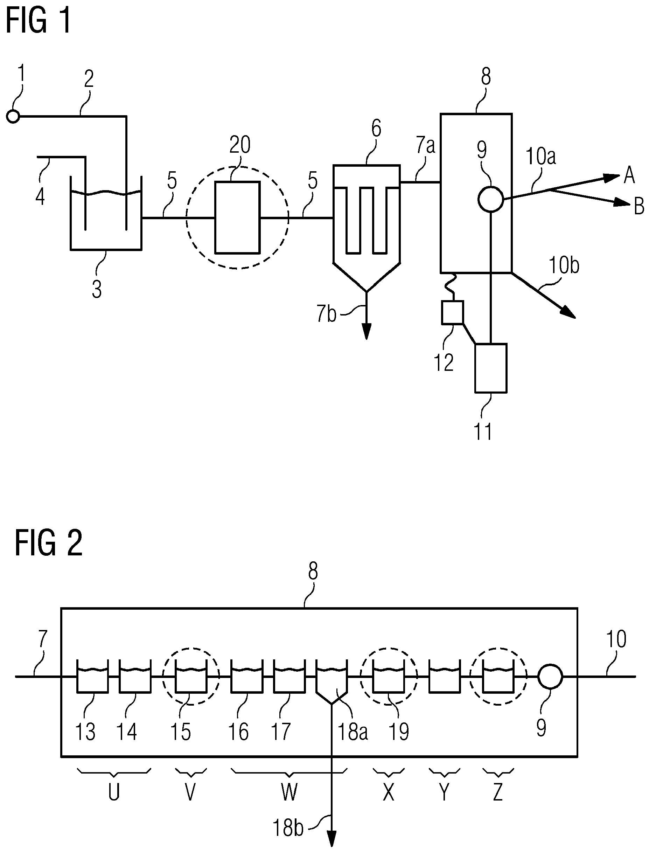

Figur 1 zeigt anhand einer Ausführungsform schematisch den Ablauf eines erfindungsgemäßen Verfahrens in einer erfindungsgemäßen Vorrichtung.

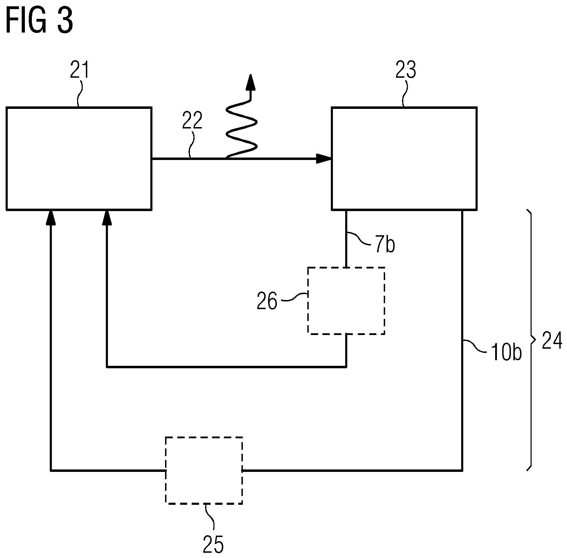

Festes Abscheidungsprodukt 1 aus einer adsorptiven und Natriumbikarbonat-basierten Abgasreinigung eines Primärprozesses wird über eine Abscheidungsprodukt-Zugabeleitung 2 in einen Lösebehälter 3 geleitet und dort mit Löse-Wasser aus einer Löse-Wasser-Zuleitung 4 vereinigt. Die im Lösebehälter 3 entstehende Suspension wird über die Ausleitung 5 einer Abscheidungsvorrichtung 6, hier schematisch dargestellt als Filter, zugeführt. Ein optional in der Ausleitung 5 vorhandener Pufferbehälter 20 für Suspension ist strichliert umrandet dargestellt. Mittels Abscheidungsvorrichtung 6 wird wasserunlösliches Material weitgehend abgetrennt; im dargestellten Fall mit Filter werden zumindest 90 Massen% des wasserunlöslichen Materials abgetrennt. Die bei der Abtrennung erhaltene wässrige Ausgangslösung wird über die Ausgangslösungsleitung 7a in eine Behandlungsvorrichtung 8 eingeleitet. Zwischen Filter und Behandlungsvorrichtung könnten in der Ausgangslösungsleitung 7a Pufferbehälter angeordnet sein, was zur besseren Übersichtlichkeit nicht extra dargestellt ist. Dargestellt ist eine Materialausleitung 7b, die von der Abscheidevorrichtung 6 - also im Sinne der vorliegenden Anmeldung dem Entstehungsort des wasserunlöslichen Materials - ausgeht. Sie ist Teil einer Zuführungsvorrichtung. Zur besseren Übersichtlichkeit ist nicht extra dargestellt, wohin zugeführt wird. Die Zuführungsvorrichtung kann das wasserunlösliche Material beispielsweise in den Primärprozess, aus dem das zu reinigende Abgas entstammt, rezirkulieren; das ist schematisch in Figur 3 dargestellt. Die Behandlungsvorrichtung 8 dient zur Durchführung von mehreren aufeinanderfolgenden Behandlungsschritten aus zumindest einem Mitglied
der Gruppe von Behandlungsarten bestehend aus
- Behandlung chemischer Art,
- Behandlung mechanischer Art,
- Behandlung physikalischer Art.
Durch die Behandlungsschritte wird eine Produktlösung 9 hergestellt, die durch die Produktlösungsausleitung 10a aus der Behandlungsvorrichtung 8 ausgeleitet wird.
Die Materialausleitung 10b symbolisiert eine oder mehrere Leitungen, die von den Orten der Entstehung fester Materialien im Zuge der Behandlungsschritte ausgehen. Sie ist beziehungsweise sie sind Teile einer Zuführungsvorrichtung. Zur besseren Übersichtlichkeit ist nicht extra dargestellt, wohin zugeführt wird; die Zuführungsvorrichtung kann das feste Material beispielsweise in den Primärprozess, aus dem das zu reinigende Abgas entstammt, rezirkulieren; das ist schematisch in Figur 3 dargestellt.
Die Eigenschaften der Produktlösung 9 sollen einen vorgegebenen Grenzwert - beispielsweise mit mehreren zu erreichenden Parametern - erreichen. Eine Überwachungsvorrichtung 11 überwacht die für den vorgegebenen Grenzwert relevanten Parameter in der Produktlösung 9, schematisch dargestellt durch eine gerade Überwachungsleitung. Die in der Behandlungsvorrichtung 8 durchgeführten Behandlungsschritte werden auf Basis der Ergebnisse der Überwachung durch eine Regelvorrichtung 12 geregelt, schematisch dargestellt durch eine von der Regelvorrichtung 12 ausgehende gewellte Verbindung mit der Behandlungsvorrichtung. Übermittlung von Ergebnissen der Überwachung an die Regelvorrichtung 12 ist schematisch mit einer Verbindung zwischen Regelvorrichtung 12 und Überwachungsvorrichtung 11 dargestellt.

Die Produktlösung kann beispielsweise in die Umwelt entlassen werden, schematisch dargestellt durch Pfeil A, und/oder als Rohstoffquelle verwendet werden, schematisch dargestellt durch Pfeil B.

Figur 2 zeigt schematisch eine Variante des Ablaufs in einer Behandlungsvorrichtung 8.
Die Behandlungsvorrichtung 8 umfasst mehrere Behandlungseinheiten zur Durchführung von mehreren aufeinanderfolgenden Behandlungsschritten zur Herstellung der Produktlösung 9. Für den Behandlungsschritt U, Reduktion des COD, sind zwei sequentiell angeordnete Behandlungseinheiten 13 und 14 vorhanden. Auf Darstellung der Zuführung der Reagenzien Eisen-II-Sulfat FeSO₄, Schwefelsäure H₂SO₄ und Wasserstoffperoxid H₂O₂ aus entsprechenden Reagenzlagerbehältern über Reagenzzuleitungen wird zur besseren Übersichtlichkeit verzichtet. In die in Strömungsrichtung vom Lösebehälter 3 zur Produktlösungsausleitung 10 gesehen erste Behandlungseinheit 13 tritt Ausgangslösung ein. In die nachfolgende Behandlungseinheit 14 tritt das flüssige Produkt der vorhergehenden Behandlungseinheit 13 ein.
Auf den Behandlungsschritt U folgt der Behandlungsschritt V in der Behandlungseinheit 15, hier als optional strichliert umrandet dargestellte Fluorid-Fällung. Auf Darstellung der Zuführung des Reagenz Aluminiumchlorid AlCl₃ aus entsprechenden Reagenzlagerbehältern über Reagenzzuleitungen wird zur besseren Übersichtlichkeit verzichtet.
Auf den Behandlungsschritt V folgt der Behandlungsschritt W zur Reduktion des Gehaltes an gelösten Schwermetallionen beziehungsweise gelösten schwermetallhaltigen Ionen. In Behandlungseinheit 16 wird dazu als untergeordneter Behandlungsschritt durch Zugabe von Natronlauge NaOH der pH-Wert eingestellt und durch Zugabe von organischen Sulfiden Fällung eingeleitet, die in Behandlungseinheit 17 durch Zugabe von anionischem Polymer weitergeführt wird. In Behandlungseinheit 18a werden, beispielsweise in Behandlungseinheit 16 und/oder 17 durch Fällung entstandene, in Schwebe befindliches festes Material und ausgefälltes Material möglichst weitgehend abgetrennt. Auf Darstellung der Zuführung der Reagenzien aus entsprechenden Reagenzlagerbehältern über Reagenzzuleitungen wird zur besseren Übersichtlichkeit verzichtet.
Über die von der Behandlungseinheit 18a ausgehende Materialausleitung 18b, die Teil einer Zuführungsvorrichtung ist, wird festes Material einem Ziel zugeführt. Zur besseren Übersichtlichkeit ist nicht extra dargestellt, wohin zugeführt wird. Die Zuführungsvorrichtung kann das wasserunlösliche Material beispielsweise in den Primärprozess, aus dem das zu reinigende Abgas entstammt, rezirkulieren; das ist schematisch in Figur 3 dargestellt, da die Materialausleitung 18b der Materialausleitung 10b entsprechen kann.

Das flüssige Produkt der Behandlungseinheit 18a tritt in Behandlungseinheit 19 ein, in der der Behandlungsschritt X, Reduktion von Gesamt-Stickstoff - TN, durchgeführt wird. Auf Darstellung der Zuführung des Reagenz Natriumhypochlorit NaOCl aus entsprechenden Reagenzlagerbehältern über Reagenzzuleitungen wird zur besseren Übersichtlichkeit verzichtet.
Im nachfolgenden Behandlungsschritt Y wird filtriert, wobei auch ein Aktivkohlefilter zum Einsatz kommt.
Im nachfolgenden Behandlungsschritt Z wird mittels Ionenaustauschs der Fluoridgehalt im Filtrat des Behandlungsschrittes Y vermindert.
Dabei wird die Produktlösung 9 erhalten.
Die Behandlungsschritte X und Z sind optional und daher strichliert umrandet.

Figur 3 zeigt schematisch einen ersten Primärprozess 21, beispielsweise einen Sinterprozess, dessen Abgas in Abgasleitung 22 einer adsorptiven und Natriumbikarbonat-basierten Abgasreinigung unterzogen wird. Ausleitung gereinigten Abgases ist mit einem von Leitung 22 abzweigenden gewellten Pfeil symbolisiert. Festes Abscheidungsprodukt dieser Abgasreinigung wird wie in Figur 1 dargestellt behandelt; das ist in Figur 3 dadurch symbolisiert, dass die Abgasleitung 22 in Rechteck 23 mündet; Rechteck 23 symbolisiert den Inhalt der Figur 1. Eine Zuführungsvorrichtung 24 ist von den Materialausleitungen 7b und 10b symbolisiert, sie entsprechen den in Figur 1 besprochenen Leitungen. Die optional in diesen Leitungen der Zuführungsvorrichtung vorhandene Speichervorrichtung 25 und Aufbereitungsvorrichtung 26 sind strichliert dargestellt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination in einem erfindungsgemäßen Verfahren kombinierbar.
Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.
Die beschriebenen Eigenschaften, Merkmale und Vorteile der Erfindung sowie die Art und Weise, wie diese erreicht werden, werden klarer und deutlicher verständlich im Zusammenhang mit der Beschreibung des bzw. der Ausführungsbeispiele der Erfindung, die im Zusammenhang mit den Zeichnungen näher erläutert werden. Das bzw. die Ausführungsbeispiele dient bzw. dienen der Erläuterung der Erfindung und beschränken die Erfindung nicht auf darin angegebene Kombinationen von Merkmalen, auch nicht in Bezug auf funktionale Merkmale.

Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.
Obwohl die Erfindung im Detail durch das bzw. die bevorzugten Ausführungsbeispiele näher illustriert und beschrieben wurde, so ist die Erfindung nicht durch das bzw. die offenbarten Beispiele eingeschränkt und andere Variationen können hieraus abgeleitet werden, ohne den Schutzumfang der Erfindung gemäß den Ansprüchen zu verlassen.

### Liste der Bezugszeichen

- 1: Festes Abscheidungsprodukt
- 2: Abscheidungsprodukt-Zugabeleitung
- 3: Lösebehälter
- 4: Löse-Wasser-Zuleitung
- 5: Ausleitung
- 6: Abscheidungsvorrichtung
- 7a: Ausgangslösungsleitung
- 7b: Materialausleitung
- 8: Behandlungsvorrichtung
- 9: Produktlösung
- 10a: Produktlösungsausleitung
- 10b: Materialausleitung
- 11: Überwachungsvorrichtung
- 12: Regelvorrichtung
- 13: Behandlungseinheit
- 14: Behandlungseinheit
- 15: Behandlungseinheit
- 16: Behandlungseinheit
- 17: Behandlungseinheit
- 18a: Behandlungseinheit
- 18b: Materialausleitung
- 19: Behandlungseinheit
- 20: Pufferbehälter
- 21: Primärprozess
- 22: Abgasleitung
- 23: Rechteck
- 24: Zuführungsvorrichtung
- U: Behandlungsschritt
- V: Behandlungsschritt
- W: Behandlungsschritt
- X: Behandlungsschritt
- Y: Behandlungsschritt
- Z: Behandlungsschritt

## Patentansprüche

1. Verfahren zur Rezirkulierung von Wertstoffen in festem Abscheidungsprodukt einer adsorptiven und Natriumbikarbonat-basierten Abgasreinigung von Abgas eines ersten Primärprozesses mit Abscheidung eines festen Abscheidungsproduktes, wobei nach Vereinigung zumindest einer Teilmenge des festen Abscheidungsproduktes mit Löse-Wasser weitgehende Abtrennung von wasserunlöslichem Material erfolgt,
welches **dadurch gekennzeichnet ist, dass**
es umfasst, dass
die bei der Abtrennung erhaltene wässrige Ausgangslösung mehreren aufeinanderfolgenden Behandlungsschritten unterworfen wird,
bis für eine nach dem Durchlaufen der Behandlungsschritte erhaltene Produktlösung eine Grenzwertvorgabe erreicht wird, wobei Überwachung von einem oder mehreren grenzwertrelevanten Parametern und Regelung der Behandlungsschritte auf Basis der Ergebnisse der Überwachung erfolgt,
und wobei zumindest eine Teilmenge
- des bei der Abtrennung erhaltenen wasserunlöslichen Materials,
und/oder
- eines bei den Behandlungsschritten erhaltenen festen Materials,
und/oder
- eines aus einem oder mehreren Produkten eines oder mehrerer der Behandlungsschritte enthaltenen festen Materials,
dem ersten Primärprozess und/oder einem anderen Primärprozess zugeführt wird.

2. Verfahren nach Anspruch 1, **dadurch gekennzeichnet, dass** es sich
bei dem ersten Primärprozess
und/oder
dem anderen Primärprozess
um den Betrieb eines Mitglieds der Gruppe bestehend aus
- Sinteranlage,
- Pelletieranlage,
- Stahlwerkkonverter,
- EAF,
handelt.

3. Verfahren nach Anspruch 1 oder Anspruch 2, **dadurch gekennzeichnet, dass** beim Zuführen Aufbereitungsschritte erfolgen.

4. Verfahren nach einem der Ansprüche 1 bis 3, **dadurch gekennzeichnet, dass** der andere Primärprozess ein Primärprozess der metallurgischen Industrie ist.

5. Verfahren nach einem der Ansprüche 1 bis 4, **dadurch gekennzeichnet, dass** die Behandlungsschritte aus zumindest einem Mitglied
der Gruppe von Behandlungsarten bestehend aus
- Behandlung chemischer Art,
- Behandlung mechanischer Art,
- Behandlung physikalischer Art,
stammen.

6. Verfahren nach einem der Ansprüche 1 bis 5, **dadurch gekennzeichnet, dass** die Produktlösung in die Umwelt entlassen wird.

7. Verfahren nach einem der Ansprüche 1 bis 6, **dadurch gekennzeichnet, dass** das Löse-Wasser Abwasser einer nassen Abgasreinigung umfasst.

8. Verfahren nach einem der Ansprüche 1 bis 7, **dadurch gekennzeichnet, dass** zumindest ein Behandlungsschritt zur Reduktion von gelösten Schwermetallionen beziehungsweise gelösten schwermetallhaltigen Ionen erfolgt.

9. Verfahren nach einem der Ansprüche 1 bis 8, **dadurch gekennzeichnet, dass** die Produktlösung für ein anderes Verfahren als Rohstoffquelle verwendet wird.

10. Vorrichtung zur Rezirkulierung von Wertstoffen in festem Abscheidungsprodukt einer adsorptiven und Natriumbikarbonat-basierten Abgasreinigung von Abgas eines ersten Primärprozesses mit Abscheidung eines festen Abscheidungsproduktes,
umfassend
- zumindest einen Lösebehälter zur Vereinigung von festem Abscheidungsprodukt mit Löse-Wasser, in den zumindest eine Abscheidungsprodukt-Zugabeleitung und zumindest eine Löse-Wasser-Zuleitung münden,
- zumindest eine von dem Lösebehälter ausgehende Ausleitung zum Ausleiten von Suspension aus dem Lösebehälter,
- zumindest eine Abscheidungsvorrichtung zur Abtrennung von wasserunlöslichem Material aus der Suspension unter Herstellung einer Ausgangslösung, wobei die Ausleitung in die Abscheidungsvorrichtung mündet,
- zumindest eine Behandlungsvorrichtung zur Durchführung von mehreren aufeinanderfolgenden Behandlungsschritten zur Herstellung einer Produktlösung,
- zumindest eine von der Abscheidungsvorrichtung ausgehende Ausgangslösungsleitung zur Einleitung von Ausgangslösung in die Behandlungsvorrichtung,
- zumindest eine Produktlösungsausleitung, die von der Behandlungsvorrichtung ausgeht,
- zumindest eine Überwachungsvorrichtung zur Erfassung von zumindest einem Parameter zumindest in der Produktlösung, die mit zumindest einer Regelvorrichtung geeignet zur Regelung der Behandlungsvorrichtung auf Basis von Ergebnissen der Überwachungsvorrichtung verbunden ist,
- zumindest eine Zuführungsvorrichtung zur Zufuhr von festem Material zu dem ersten Primärprozess und/oder einem anderen Primärprozess.

11. Vorrichtung nach Anspruch 10, **dadurch gekennzeichnet, dass** die Behandlungsvorrichtung zumindest eine Behandlungseinheit zur Reduktion von gelösten Schwermetallionen beziehungsweise gelösten schwermetallhaltigen Ionen umfasst.

12. Vorrichtung nach Anspruch 10 oder Anspruch 11, **dadurch gekennzeichnet, dass** die Behandlungsvorrichtung zumindest eine Vorrichtung zur Feststoffabtrennung umfasst.

13. Vorrichtung nach einem der Ansprüche 10 bis 12, **dadurch gekennzeichnet, dass** die Zuführungsvorrichtung Vorrichtungen zur Speicherung von festem Material umfasst.

14. Vorrichtung nach einem der Ansprüche 10 bis 13, **dadurch gekennzeichnet, dass** die Zuführungsvorrichtung Vorrichtungen zur Gewinnung von festem Material aus Produkten von Behandlungsschritten umfasst.

15. Vorrichtung nach einem der Ansprüche 10 bis 14, **dadurch gekennzeichnet, dass** die Zuführungsvorrichtung Vorrichtungen zur Aufbereitung umfasst.
